**Europäisches Patentamt**

**European Patent Office**

**Office européen des brevets**

(19)

(11) Veröffentlichungsnummer: **0 256 104**
**B1**

(12)

# EUROPÄISCHE PATENTSCHRIFT

(45) Veröffentlichungstag der Patentschrift:
23.08.89

(21) Anmeldenummer: 87901422.3

(22) Anmeldetag: 03.02.87

(86) Internationale Anmeldenummer:
PCT/EP 87/00051

(87) Internationale Veröffentlichungsnummer:
WO 87/04598 (13.08.87 Gazette 87/18)

(51) Int. Cl.⁴: **A 23 F 5/14,** A 23 F 5/40,
A 23 F 5/20

(54) KAFFEE UND VERFAHREN ZU DESSEN HERSTELLUNG.

(30) Priorität: 06.02.86 DE 3603575

(43) Veröffentlichungstag der Anmeldung:
24.02.88 Patentblatt 88/8

(45) Bekanntmachung des Hinweises auf die Patenterteilung:
23.08.89 Patentblatt 89/34

(84) Benannte Vertragsstaaten:
AT BE CH DE FR GB IT LI LU NL SE

(56) Entgegenhaltungen:
EP-A-0 107 171
EP-A-0 108 038
FR-A-676 752
GB-A-455 902
US-A-2 198 207

(73) Patentinhaber: **CODE Kaffee- Handelsgesellschaft
mbH, Überseering 18, D-2000 Hamburg 60 (DE)**

(72) Erfinder: **BUCHHOLZ, Klaus, Hoopwischen 36,
D-2000 Hamburg 65 (DE)**
Erfinder: **GÖSSWEIN, Claus, F., Ellernbrook 20,
D-2110 Buchholz 5 (DE)**
Erfinder: **BALL, Michael, Hagenwisch 2c, D-2083
Halstenbek (DE)**
Erfinder: **HUBERT, Peter, Hasenkamp 21, D-2150
Buxtehude (DE)**
Erfinder: **KOPSCH, Reiner, Möwenring, D-2000
Schenefeld (DE)**
Erfinder: **LUTZ, Henning, Hagenwisch 2a, D-2083
Halstenbek (DE)**

(74) Vertreter: **UEXKÜLL & STOLBERG Patentanwälte,
Beselerstrasse 4, D-2000 Hamburg 52 (DE)**

**Beschreibung**

Die Erfindung betrifft Röst- oder Instantkaffee mit einem erhöhten Gehalt an Chlorogensäure, sowie Verfahren zu deren Herstellung.

Unter Chlorogensäure werden hier nicht nur die in Kaffee am meisten enthaltene und in der Literatur häufig als "die Chlorogensäure" bezeichnete 3-Caffeoylchinasäure verstanden, sondern zusätzlich auch 4- und die 5-Caffeoylchinasäure sowie Gemische der Isomeren.

Beim Rösten von Rohkaffee tritt ein beträchtlicher Gewichtsverlust auf; normalerweise liegt der Einbrand bei etwa 12 bis 17 Gew.-%. Der Verlust ist nicht nur auf die im Rohkaffee nach dessen Trocknen noch vorhandene Restfeuchtigkeit zurückzuführen, welche beim Rösten verlorengeht. Auch verschiedene Inhaltsstoffe des Rohkaffees werden beim Röstprozeß verdampft oder chemisch abgebaut und gehen so verloren. Zu den Inhaltsstoffen des Rohkaffees, deren Gehalt durch das Rösten beträchtlich abnimmt, gehört auch die Chlorogensäure. Dieser Abbau der Chlorogensäure wurde bislang in Kauf genommen, weil sie als unerwünschter Bestandteil galt (vergl. DE-PS-685 367, Seite 1, Zeilen 44/45).

Es sind verschiedene Verfahren zur Herstellung von coffein-armem bzw. coffein-freiem Kaffee durch Entzug des Coffeins aus dem Rohkaffee bekannt. Bei diesen Verfahren wird der Rohkaffee mit Wasser oder einem anderen Lösungsmittel extrahiert, worauf dem Extrakt mit Hilfe organischer Lösungsmittel oder fester Adsorptionsmittel das Coffein entzogen wird (DE-PS-685 367; EP-PS-8 398). Der von Coffein befreite Extrakt kann gegebenenfalls dem Rohkaffee wieder zugesetzt werden, so daß dem Röstprozeß grüne Kaffeebohnen unterworfen werden, welche bis auf das Coffein alle Inhaltsstoffe vollständig enthalten (DE-PS-685 367, Seite 1, Zeilen 29 - 31). Es ist ferner bereits beschrieben worden, dem Rohkaffee das Coffein auf die Weise zu entziehen, daß er mit einem Extrakt in Kontakt gebracht wird, welcher an allen extrahierbaren Inhaltsstoffen bis auf das Coffein gesättigt ist. Das Coffein des Rohkaffees geht selektiv in diesen Extrakt über und wird letzterem anschließend wieder entzogen (DE-OS-3 119 277; EP-OS-78 088). Auch mit Hilfe dieser Verfahren wird ein coffein-armer bzw. entcoffeinierter Rohkaffee gewonnen, bei dessen Röstung andere Inhaltsstoffe, insbesondere ein beträchtlicher Teil der Chlorogensäure verloren gehen. Bei den älteren Verfahren wird die Chlorogensäure als vermeintlich unerwünschter Bestandteil sogar bereits bei der Extraktion entfernt (DE-PS-685 367, Seite 1, Zeilen 43 - 49).

Es wurde nunmehr gefunden, daß Röst- oder Instantkaffee mit einem höheren Gehalt an Inhaltsstoffen des Rohkaffees, insbesondere Chlorogensäure, eine verbesserte Bekömmlichkeit aufweist und daß auf diese Weise ferner ohne Geschmackseinbußen aus Rohkaffee eine höhere Gewichtsausbeute an Röstkaffee erhalten werden kann. Insbesondere wurde überraschend festgestellt, daß Chlorogensäure die Magenschleimhaut gegen Reizungen zu schützen vermag und daher die Bekömmlichkeit von Nahrungs-, Genuß- und Arzneimitteln verbessert.

Die verbesserte Bekömmlichkeit ist an einer deutlich reduzierten Säuresekretion nachzuweisen. Diese Reduzierung wird offenbar dadurch erhalten, daß der in jedem Röstkaffee vorhandene Anteil an Röststoffen, deren physiologische Wirkung sich in Unverträglichkeiten (Sodbrennen etc.) äußert, durch einen erhöhten Chlorogensäuregehalt kompensiert wird.

Die Bekömmlichkeit eines Röstkaffees hängt danach von dem Verhältnis Chlorogensäure/Röststoffe im Kaffeeaufguß ab. Unter diesem Gesichtspunkt wäre es erwünscht zu verhindern, daß der Chlorogensäuregehalt durch die Röstung des Kaffees stark erniedrigt wird. Normalerweise nimmt der natürliche Chlorogensäuregehalt von Kaffee beim Rösten um etwa 40 bis 80 % ab, so daß im Röstkaffee nur noch etwa 2 Gew.-%, äußerstenfalls etwa 2,4 bis 2,6 Gew.-% Chlorogensäure (bestimmt mittels HPLC) gefunden werden. Ältere Arbeiten (z. B. G. Lehmann et al., Deutsche Lebensmittel-Rundschau 63, 144 - 151 und 273 - 275 (1967); G. Lehmann, Ernährungs-Umschau 1971, 43 - 47) berichten zwar über wesentlich höhere Chlorogensäuregehalte in Röstkaffees und Instant-Kaffeepulvern. Die dabei angewandte Bestimmungsmethode erfaßt jedoch auch andere phenolische Verbindungen und liefert deshalb weit überhöhte Werte. Alle in der vorliegenden Beschreibung und den Ansprüchen angegebenen Chlorogensäurewerte wurden mittels der HPLC-Methode (Hochdruckflüssigkeits-Chromatographie) erhalten und liegen gegenüber der früher verwendeten DIN-Methode oder anderen älteren Bestimmungsmethoden um ca. 50 % niedriger (vergl. G. Lehmann und B. Binkle, Deutsche Lebensmittel-Rundschau 79, 266 - 269 (1983); W. Schünemann und H.G. Maier, Deutsche Lebensmittel-Rundschau 82, 73 - 76 (1986)).

Gegenstand der Erfindung ist demgemäß Röstkaffee mit einem erhöhten Gehalt an Chlorogensäure von mehr als 2,8 Gew.-%, vorzugsweise von mindestens 3 Gew.-%, beispielsweise von 3,25 Gew.-% oder mehr der in Anspruch 1 geschilderten Art bzw. Instantkaffeepulver mit einem erhöhten Chlorogensäuregehalt von mehr als 8,5 Gew.-%. Wie oben bereits erwähnt, liegt der Chlorogensäuregehalt von üblichem Röstkaffee bei nur etwa 2 Gew.-% und erreicht in seltenen Fällen etwa 2,4 bis 2,6 Gew.-%. Nur durch extrem milde Röstung, welche keinen geschmacklich einwandfreien Kaffee mehr liefert, könnten höhere Chlorogensäuregehalte erzielt werden.

Der Bereich der Chlorogensäuregehalte in den erfindungsgemäßen Röstkaffees, bei denen eine positive physiologische Wirkung im Sinne besserer Bekömmlichkeit nachgewiesen werden kann, beginnt im allgemeinen bei ca. 2,8 Gew.-%, wobei die schon erwähnte Relation zwischen Chlorogensäuregehalt und Röststoffpotential zu berücksichtigen ist. Letzteres ist vom Röstgrad und von der Extrahierbarkeit des Röstkaffees abhängig. Dies bedeutet, daß der Chlorogensäuregehalt prozentual mindestens um denselben Betrag erhöht werden soll, um den jeweils der Röststoffgehalt (gemessen als Farbwert des gemahlenen

2

Kaffees) zunimmt. Der Farbwert von handelsüblichen normal gerösteten Kaffeesorten liegt bei etwa 90. Bei dem diesem Farbwert entsprechenden Röststoffgehalt im Aufguß reicht erfindungsgemäß im allgemeinen ein Chlorogensäuregehalt im Röstkaffee in der Größenordnung von 2,8 Gew.-% aus. Bei Erniedrigung des Farbwertes (entsprechend einem steigenden Röststoffgehalt) soll der Chlorogensäuregehalt erfindungsgemäß mindestens in demselben Ausmaß angehoben werden. Wenn beispielsweise durch stärkere Röstung der Farbwert auf 80, d.h. um etwa 12 % sinkt, soll der Chlorogensäuregehalt vorzugsweise um mindestens 12 %, d.h. auf etwa 3,14 Gew.-% erhöht werden, um die physiologische Wirkung der Röststoffe wirksam zu kompensieren.

Der durch Reflexionsmessung an gemahlenem Röstkaffee bestimmte Farbwert ist anerkannterweise ein Maß für den Grad der Röstung von Kaffee.

Es wurde gefunden, daß ein erhöhter Gehalt an Chlorogensäure erfindungsgemäß auf mehreren Wegen erreicht werden kann, wobei der Röstkaffee die Chlorogensäure auch teilweise in Form von Salzen, insbesondere Salzen der Alkalimetalle, vorzugsweise vor allem Kalium enthalten kann. Solche Salze entfalten im menschlichen Magen dieselbe Wirkung wie freie Chlorogensäure, da sie im stark sauren Magenmilieu weitgehend in die freie Säure überführt werden.

Zur Herstellung des Röstkaffees kann man erfindungsgemäß so vorgehen, daß man durch Behandeln von Rohkaffee mit einem Lösungsmittel einen Extrakt herstellt, den extrahierten Kaffee und/oder eine nicht extrahierte Kaffeecharge röstet, den gegebenenfalls aufkonzentrierten Extrakt ganz oder teilweise dem Röstkaffee vor oder nach dem Mahlen zusetzt und den Kaffee dann trocknet. Die Inhaltsstoffe des Rohkaffee-Extrakts werden so an der Röstung vorbeigeführt und unterliegen keinem Abbau.

Als Lösungsmittel wird vorzugsweise Wasser verwendet. Vor dem Imprägnieren des Röstkaffees mit dem Rohkaffee-Extrakt wird letzterer vorzugsweise aufkonzentriert, so daß er einen Feststoffgehalt von mehr als 15, insbesondere mehr als 20 Gew.-% aufweist. Der Extrakt wird auf den Röstkaffee, d.h. die gerösteten Bohnen oder gegebenenfalls auch den bereits gemahlenen Kaffee, aufgesprüht oder aufgestäubt. Anschließend wird zur Entfernung der Feuchtigkeit bei etwa 60 bis 120°C, vorzugsweise bei etwa 80 bis 100°C getrocknet, um die aus dem Extrakt stammende Feuchtigkeit zu vertreiben.

Etwa 25 bis 28 Gew.-% der Trockensubstanz grüner Kaffeebohnen sind grundsätzlich extrahierbar, doch werden erfindungsgemäß im allgemeinen nur etwa 5 bis 8 Gew.-% extrahiert. Es ist nicht erforderlich, den gesamten Extrakt später dem Röstkaffee zuzusetzen. Vielmehr können auch nur ein Teil des Rohkaffee-Extraktes und/oder nur bestimmte Inhaltsstoffe hierfür ausgewählt werden. Beispielsweise kann man aus dem Rohkaffee-Extrakt bestimmte ausgewählte Inhaltsstoffe abtrennen, welche nach dem Rösten dem Kaffee wieder zugesetzt werden sollen, während man 0 bis 100 % des zurückbleibenden Extraktes dem Rohkaffee vor dem Rösten wieder zufügt. Mit anderen Worten bedeutet dies, daß bestimmte Inhaltsstoffe aus dem Extrakt ausgewählt und dem Röstkaffee zugesetzt werden, während andere Inhaltsstoffe entweder ganz oder teilweise wieder dem Rohkaffee zugeführt und damit dem Röstprozeß unterworfen oder aber ganz abgetrennt und verworfen werden.

Für die Abtrennung der Chlorogensäure aus Rohkaffee-Extrakten kann die Gelpermeations-Chromatographie zur Anwendung kommen, wobei z. B. modifizierte Polysaccharide eingesetzt werden, die in Verbindung mit Wasser ein heteroporöses, gequollenes Netzwerk mit variabler Porengrößenverteilung ergeben. Die Fraktionierung der gelösten Substanzen erfolgt normalerweise nach Molekülgröße. Im Fall der Chlorogensäure hat sich aber gezeigt, daß hier ein anderer Mechanismus wirksam sein muß, da die Säure erheblich länger festgehalten wird, als aufgrund ihrer Molekülgröße zu erwarten wäre. Dadurch erscheint sie erst in den letzten Eluatfraktionen. Die chlorogensäurefreien sowie die chlorogensäurehaltigen Eluate werden separat aufgefangen und aufkonzentriert. Die ersteren werden gegebenenfalls dem Rohkaffee, die letzteren dem daraus hergestellten Röstkaffee zugesetzt. Die Chlorogensäuregehalte des Röstkaffees sind so nur abhängig vom Teilextraktionsgrad des Rohkaffees und können innerhalb dieses Rahmens beliebig eingestellt werden. Gleichzeitig ergibt sich damit noch ein mengenmäßiger Gewinn, wie eingangs bereits erwähnt, da das dem Röstkaffee nachträglich zugesetzte Material keinem thermischen Abbau unterliegt.

Eine weitere Möglichkeit zur Anhebung des Chlorogensäuregehalts im Röstkaffee besteht darin, daß man aus Rohkaffee ca. 5 bis 10 Gew.-% seiner löslichen Bestandteile extrahiert, die entstandene Lösung auf einen Feststoffgehalt von z. B. 20 % einengt und sie ohne weitere Behandlung dem teilextrahierten, auf einen mittleren Wassergehalt zurückgetrockneten Rohkaffee wieder zuführt. Das so erhaltene Material muß nochmals auf eine Feuchte getrocknet werden, die eine anschließende Röstung erlaubt. Überraschenderweise entsteht dabei ein Röstkaffee, der im Vergleich zu unbehandeltem Kaffee einen um bis zu 0,5 Gew.-% erhöhten Chlorogensäuregehalt aufweist, was möglicherweise eine Folge der bei der Rohkaffee-Imprägnierung entstehenden asymmetrischen Extraktverteilung über den Bohnenquerschnitt ist.

Eine andere Möglichkeit besteht darin, daß man bereits bei der Extraktion das Verfahren so steuert, daß nur diejenigen Inhaltsstoffe dem Rohkaffee entzogen werden, welche später dem Röstkaffee wieder zugesetzt werden sollen. Dies kann beispielsweise in der Weise geschehen, daß man zum Extrahieren des Rohkaffees einen im Kreislauf geführten Extrakt verwendet, der nur hinsichtlich derjenigen Inhaltsstoffe nicht gesättigt ist, die später dem Röstkaffee zugesetzt werden sollen. Nur diese Inhaltsstoffe gehen dann aus der Bohne in die Lösung über. Sie werden mit geeigneten Trennverfahren aus der Lösung separiert, aus dem Kreislauf ausgeschleust und später dem Röstkaffee wieder zugesetzt.

Die Extraktion des Rohkaffees im Rahmen des erfindungsgemäßen Verfahrens erfolgt nach den an sich bereits bekannten Verfahren, wie sie beispielsweise in der DE-OS-3 119 277 beschrieben sind.

Wie eingangs bereits erläutert, ist es ein besonderer Aspekt der Erfindung, daß mit ihrer Hilfe ein Röstkaffee mit erhöhtem Chlorogensäuregehalt erhalten werden kann, indem man dem Röstkaffee einen Chlorogensäure enthaltenden Extrakt zusetzt. Gemäß einer weiteren Ausführungsform der Erfindung ist es jedoch auch möglich, Röstkaffee mit isolierter Chlorogensäure zu versetzen, welche aus grünen Kaffeebohnen oder anderen Pflanzen erhalten wurde (vergl. zum Isolierungsverfahren die gleichzeitige Anmeldung PCT/EP 87 = deutsche Patentanmeldung P 36 03 574.2 - 42).

Nach einer anderen Ausführungsform kann ein Chlorogensäurezusatz auch zum Rohkaffee erfolgen, wobei aber zu beachten ist, daß wegen des thermischen Abbaus der Zusatz so dosiert werden muß, daß das Röstprodukt einen ausreichend hohen Chlorogensäuregehalt im Sinne der Erfindung aufweist.

Gemäß einer weiteren Ausführungsform wird Rohkaffee abgestuft mit verschiedenen Röstgraden geröstet, so daß die Einzelröstungen unterschiedliche Chlorogensäuregehalte ergeben. Daraus lassen sich Mischungen zusammenstellen, die sensorisch vom üblichen Kaffeegetränk nicht abweichen und deren Gesamtchlorogensäuregehalt deutlich höher liegt als der aus einer einheitlichen Röstung stammende. Diese Vorgehensweise liefert also überraschenderweise bei verhältnismäßig hohem Farbwert (niedrigem Röstgrad) ein Produkt, das sensorisch einem Kaffee mit üblichem Röstgrad entspricht. Dies gilt auch für die Röstung unterschiedlicher Provenienzen und/oder Arten, wobei deren Auswahl bereits unter dem Gesichtspunkt eines hohen Chlorogensäuregehalts im Ausgangsmaterial erfolgen kann.

Das Verfahren der Mischung unterschiedlich gerösteter Komponenten kann als eine auf die Erhöhung des Chlorogensäuregehalts ausgerichtete Mischungsoptimierung bezeichnet werden. Die damit erreichbare Chlorogensäureanhebung führt zu Werten, die zur Erzielung des erfindungsgemäßen Chlorogensäuregehalts nur noch der Aufstockung durch relativ kleine Mengen Chlorogensäure aus externen Quellen bedarf. Sie kann aber auch erreicht werden durch geeignete Kombinationen der Mischungsoptimierung mit einer oder mehreren der vorstehend geschilderten Verfahrensvarianten.

Zwar wird US-A-2 198 207 ein Verfahren beschrieben, bei dem (gemahlene) geröstete Kaffeebohnen mit grünen Kaffeebohnenmehl(-extrakt) vermischt wird. Es handelt sich dabei aber um sehr kleine Anteile an grünem Kaffee und der Grund des Zusatzes ist eine Stabilisierung der gerösteten Kaffees.

Die erfindungsgemäßen Verfahrensweisen lassen sich auch zur Herstellung von coffeinfreiem oder teilentcoffeiniertem Röstkaffee anwenden, indem man von Rohkaffee ausgeht, welchem das Coffein teilweise oder ganz entzogen worden ist.

Auch pulverförmiger Löskaffee bzw. Instantkaffee läßt sich erfindungsgemäß gewinnen. Handelsübliche Instantkaffeepulver weisen Chlorogensäuregehalte von etwa 3,5 bis 5,0 Gew.-% auf, was bei üblicher Dosierung zu einem Chlorogensäuregehalt von etwa 51 bis 72 mg/100 ml Kaffee führt. Aus normalem Röstkaffee wird unter Anwendung der üblichen Filterzubereitungsmethoden ein Kaffee mit etwa 130 mg Chlorogensäure/100 ml Kaffee erhalten, d.h. der Chlorogensäuregehalt von Instantkaffeepulvern ist besonders niedrig. Bei Verwendung des erfindungsgemäßen Röstkaffees erhält man im Kaffeegetränk Chlorogensäuregehalte über 160 mg/100 ml Kaffee. Erfindungsgemäß wird daher an geeigneter Stelle des Verfahrens zur Herstellung von Instantkaffee oder dem fertigen Instantkaffeepulver soviel Chlorogensäure zugesetzt, daß ein Kaffee mit dem angestrebten höheren Chlorogensäuregehalt erhalten wird. Dazu ist normalerweise ein Zusatz von etwa 5 bis 7, insbesondere etwa 6 Gew.-% Chlorogensäure zum Instantkaffeepulver erforderlich, so daß dessen Gehalt mindestens etwa 8,5 Gew.-% beträgt.

Zur näheren Erläuterung der Erfindung sollen die nachfolgenden Beispiele dienen, auf welche die Erfindung jedoch nicht beschränkt ist. Alle Prozentangaben sind Gewichtsprozent. Die angegebenen Chlorogensäuregehalte wurden mit Hilfe der Hochdruckflüssigkeitschromatographie (HPLC) mit Geräten (Pumpe, Spektralphotometer, Trennsäule) der Firma Waters und einem Integrator der Fa. Shimadzu wie folgt bestimmt:

| Säule: | Cartridge 8 C 1810 μ |
| Einspritzvolumen: | 20 μl |
| Detektion: | bei 280 nm |
| Flußrate: | 1 - 4 ml/min |
| Fließmittel: | 20 ml Tetrahydrofuran + 1 ml Eisessig ad 1000 ml dest. Wasser |

Die Meßlösung wurde hergestellt durch Extraktion des gemahlenen Ausgangsmaterials im Ultraschallbad mit Wasser und Filtration durch ein 45 μ-Filter. Als Eichlösung diente eine Lösung von 5 mg 3-Caffeoylchinasäure in 100 ml Wasser. Zur Berechnung der Gehalte wurde die Summe der Peakflächen der 3-, 4-und 5-Caffeoylchinasäuren auf die Peakfläche der Vergleichssubstanz bezogen.

Die Bestimmung des Farbwertes erfolgt mit einem Farbmeßgerät vom Typ Tricolor LFM 3 der Firma Lange-Industriemeßgeräte. Zur Messung wird in einer Küvette befindlicher Mahlkaffee mit standardisiertem Mahlgrad unter einem Winkel von 45° mit einer Lichtquelle angestrahlt und das diffus reflektierte Licht von drei Photoempfängern gleichzeitig erfaßt. Als Maß für die Farbintensität des Kaffees wird der auf der Hell-Dunkel-Achse gemessene Wert L* (DIN 6174, CIE-LAB 1976) herangezogen. Die L*-Werte werden über lineare Regression in den Farbwert, der in Skalenteilen (Skt.) angegeben wird, umgerechnet. Folgende drei Wertepaare ergeben die Regressionsgrade: L* 19,69/75 Skt, L* 22,30/90 Skt, L* 25,77/110 Skt. Die Farbe der üblicherweise gerösteten Kaffees liegt bei dem beschriebenen Meßverfahren bei 90 Skt. Bei heller gerösteten Kaffees werden entsprechend höhere Zahlenwerte gemessen.

4

## Beispiel 1

7 kg Rohkaffee wurden mit 6,1 l Wasser 1,5 Stunden lang bei 80°C unter ständiger Bewegung extrahiert. Nach Abgießen der Extraktlösung wurden die Bohnen von anhaftendem Saft durch Absprühen mit Wasser befreit, auf ca. 12,5 % Wassergehalt zurückgetrocknet und in Heißluft bei 240°C geröstet. Sprühwasser und Extraktlösung wurden vereinigt, auf einen Trockensubstanzgehalt von ca. 20 % schonend eingeengt und dieses Konzentrat wurde in einem Rotationskolben auf den vorgelegten Röstkaffee aufgesprüht. Die Bohnen nahmen die Lösung auf und konnten dann im Heißluftstrom bei 90°C bis auf einen Restwassergehalt von ca. 3 % zurückgetrocknet werden. Eine nicht extrahierte Vergleichsprobe des Ausgangsmaterials wurde direkt wie oben geröstet. Beide Kaffees wurden wegen der sensorischen Vergleichbarkeit auf den gleichen Röstgrad gebracht, wobei die Farbwertmessung als Maß für den Röstgrad diente. Die folgende Tabelle 1 zeigt die gefundenen analytischen Daten im Vergleich.

### Tabelle 1

| | Chlorogensäure-gehalt % i.T. | Extrakt-gehalt % i.T. | Farb-wert |
|---|---|---|---|
| Röstkaffee, erfin-dungsgemäß behandelt | 3,19 | 27,1 | 92 |
| Röstkaffee, unbehandelt | 2,08 | 26,8 | 90 |

Das erfindungsgemäß behandelte Produkt wies einen gegenüber dem unbehandelten Vergleich um rund 50 % angehobenen Chlorogensäuregehalt auf, wobei der Aufguß trotz des höheren Säuregehalts überraschend mild schmeckte und sensorisch der unbehandelten Probe vergleichbar war.

## Beispiel 2

7 kg Rohkaffee wurden wie in Beispiel 1 mit Wasser extrahiert. Die anfallende Extraktlösung wurde mit einem Kationenaustauscher in der H+-Form behandelt und dadurch auf einen pH-Wert von 2,3 gebracht. Nach Aufkonzentrieren der Lösung auf einen Extraktgehalt von ca. 20 % wurde sie zur Abtrennung von Chlorogensäure einer Gelpermeationschromatographie unterzogen. Als Trennmedium wurde in diesem Fall ein relativ niedrig vernetztes Dextran mit der Markenbezeichnung "SEPHADEX G 25" (Pharmacia A.B.) eingesetzt. Dazu erfolgte zunächst die Aufgabe der Probelösung auf das Gelbett, wobei ein Verhältnis von Probe zu Gel-Volumen von 1 : 5 eingehalten wurde. Die Elution erfolgte mit entsalztem, entgastem Wasser mit einer Fördermenge von 1 l $H_2O$/l Gelbett x h bei einem Gelbettvolumen von 15 l.

Aufgrund der unerwarteten Affinität, die Chlorogensäure zur Dextranmatrix - wie oben bereits beschrieben - entwickelt, wird sie langsamer eluiert als ihre Molekülgröße erwarten läßt und verläßt die Säule nach fast allen anderen Extraktbestandteilen. Letztere wurden daher als erste Fraktion aufgefangen, während die zweite Fraktion hauptsächlich die Chlorogensäure-Isomeren enthielt. Die Reinheit des Isomerengemischs in der zweiten Fraktion betrug ca. 80 %.

Beide Fraktionen wurden schonend eingeengt bis zu ein Konzentration von je ca. 20 %.

Der teilextrahierte Rohkaffee wurde auf ca. 12 bis 15 % Wassergehalt zurückgetrocknet und mit dem fast chlorogensäurefreien Konzentrat der ersten Fraktion durch Aufsprühen bei 50°C im Rotationskolben imprägniert. Die Bohnen nahmen die Extraktlösung im Verlauf von ca. 1 Stunde auf. Im Anschluß daran wurden nochmals 0,5 l Wasser in etwa 0,5 Stunden aufgesprüht, was zu einem weiteren Einziehen auch der außen anhaftenden Extraktreste in das Bohneninnere führte. Nach Heißlufttrocknung bei ca. 90°C bis auf eine Restfeuchte von 14 % wurden die Bohnen im Heißluftstrom von 240°C wiederum bis auf einen Farbwert von 90 Skalenteilen geröstet. Auf die noch warmen Röstbohnen wurde dann im Rotationskolben die konzentrierte Chlorogensäurelösung aufgesprüht und die Bohnen wurden anschließend im Heißluftstrom bei 90°C zurückgetrocknet. Die Ergebnisse im Vergleich zu dem unbehandelten, direkt gerösteten Kaffee zeigt Tabelle 2.

### Tabelle 2

| | Chlorogensäure-gehalt % i.T. | Extrakt-gehalt % i.T. | Farb-wert |
|---|---|---|---|
| Röstkaffee, erfin-dungsgemäß behandelt | 3,30 | 27,8 | 93 |
| Röstkaffee, unbehandelt | 2,08 | 26,8 | 91 |

**Beispiel 3**

Aus 1,1 kg Rohkaffee mit einem Chlorogensäuregehalt von 5,5 % in der Trockensubstanz wurde durch dreimalige Extraktion mit je 4,1 l Wasser bei 80°C eine Extraktlösung hergestellt, die zur Gewinnung von Chlorogensäure schonend eingengt, mit Salzsäure auf pH = 2 eingestellt, filtriert und als ca. 20 %-ige Lösung der Gelpermeations-Chromatographie unterworfen wurde, wie bereits in Beispiel 2 beschrieben. Da die Chloridionen im ersten Eluat erscheinen, das in diesem Fall verworfen wurde, konnte das Ansäuern mit Salzsäure erfolgen. Die Chlorogensäurefraktion wurde separat aufgefangen und bis auf ca. 20 % Trockensubstanzgehalt eingengt. 280 ml dieser Lösung, deren Chlorogensäuregehalt ca. 18 % betrug, wurden auf 4 kg eines im übrigen unbehandelten Röstkaffees aufgesprüht und da Material wurde im Heißluftstrom bei 80°C auf etwa 3 Wassergehalt zurückgetrocknet. Der Chlorogensäurezusatz bezogen auf die vorgelegte Röstkaffeemenge betrug damit rund 1,3 %. Die analytischen Ergebnisse im Vergleich zum nicht beaufschlagten Röstkaffee zeigt Tabelle 3.

**Tabelle 3**

|  | Chlorogensäure-<br>gehalt<br>% i.T. | Extrakt-<br>gehalt<br>% i.T. | Farb-<br>wert |
|---|---|---|---|
| Röstkaffee, erfin-<br>dungsgemäß behandelt | 3,28 | 28,4 | 91 |
| Röstkaffee,<br>unbehandelt | 2,10 | 27,1 | 92 |

**Beispiel 4**

Von Rohkaffees der Provenienzen Columbia, Tanganyika und Kenia wurden jeweils im Röstgrad abgestufte Röstungen mit entsprechend unterschiedlichen Chlorogensäuregehalten hergestellt und daraus wurde die in Tabelle 4 aufgeführten Mischung A zusammengestellt. In ähnlicher Weise entstand Mischung H, die jedoch ausschließlich aus Columbia-Röstvarianten zusammengesetzt wurde.

Jeweils 4 kg der Mischungen von A und H wurden dann, wie in Beispiel 3 beschrieben, mit 20 %-iger Chlorogensäurelösung imprägniert und wieder zurückgetrocknet. Tabelle 4 zeigt die jeweils zugesetzten Mengen an Chlorogensäure und die erzielten, d.h. analytisch gefundenen Prozentgehalte.

Der Chlorogensäurezusatz bezogen auf die vorgelegte Röstkaffeemischung betrug 0,5 % bei Mischung A und ca. 0,4 % bei Mischung H. Die unter "Steigerung, gefunden" ausgewiesenen Prozentwerte beziehen sich jeweils auf den Chlorogensäuregehalt des zum Vergleich herangezogenen Columbia-Kaffees.

**Tabelle 4**

| Muster |  |  | Farbwert<br>Mischung<br>gefunden | Chlorogensäuregehalt | | | Chlorogensäure | |
|---|---|---|---|---|---|---|---|---|
|  |  |  |  | berechnet<br>% i.T. | gefunden<br>% i.Tr. | Steigerung<br>gefunden | Zusatz<br>g/4 kg | Gehalt<br>%i.Tr. |
| Columbia - Vergleich |  |  | 92 | -- | 2.13 | -- | - | - |
| Mischung A | Chlorogen-<br>säuregehalt<br>% i.T. | Farb-<br>wert<br>Sktle. |  |  |  |  |  |  |
| 35 % Columbia | 2,13 | 92 |  |  |  |  |  |  |
| 30 % Tanganyika | 3,35 | 114 | 102 | 2,82 | 2,80 | + 31,5 | 22 | 3,30 |
| 35 % Kenia | 2,98 | 110 |  |  |  |  |  |  |
| Mischung H | Chlorogen-<br>säuregehalt<br>% i.Tr. | Farb-<br>wert<br>Sktle. |  |  |  |  |  |  |
| 50 % Columbia | 3,17 | 126 |  |  |  |  |  |  |
| 25 % Columbia | 1,66 | 79 | 131 | 2,95 | 2,88 | +35,2 | 18 | 3,32 |
| 25 % Columbia | 3,78 | 155 |  |  |  |  |  |  |

**Physiologische Versuche**

In einer Versuchsreihe wurde der Einfluß unterschiedlicher Kaffeeproben auf die menschliche Magensäuresekretion untersucht. Jeder Proband erhielt ca. 250 ml der einzelnen Kaffeeproben randomisiert in doppelblinder crossover-Anordnung. Bei den Probanden handelte es sich um gesunde Personen männlichen und weiblichen Geschlechts im Alter zwischen 19 und 35 Jahren. Nach einer 12-stündigen Nüchternperiode wurde den Probanden morgens eine naso-gastrale Sonde gelegt, über die zunächst der Magensaft quantitativ zum Zeitpunkt $t_0$ abgehebert wurde. In den folgenden 60 Min. $t_{0-60}$ wurde zur Bestimmung der basalen Säuresekretion der neu gebildete Magensaft in Abständen von 15 Min. quantitativ abgehebert. An 5 verschiedenen Untersuchungstagen, die mindestens 2 Tage auseinander lagen, erhielten die Probanden je 250 ml der Kaffeesorten 1 bis 5 bzw. I bis IV. Bevor die Probanden die verschiedenen Kaffeesorten innerhalb von 10 Min. zu sich nahmen, erfolgte zunächst die Rückgabe des zum Zeitpunkt 0 abgeheberten Magensaftes. In der 10. und 30. Minute nach Beginn des Kaffeetrinkens wurden über die Sonde je 5 ml Magensaft abgehebert. Zwischen der 30. und 150. Min. erfolgte dann wiederum in Abständen von 15 Min. eine quantitative Abheberung des Magensaftes. In diesen Proben wurde die titrierbare Säure mit 0,1n NaOH bestimmt, in den Tabellen 6 und 7 sind die gefundenen Werte in ml NaOH angegeben. Das Volumen des abgeheberten Magensaftes ist in Tabellen 6 und 7 in ml angegeben.

Für die vergleichende Auswertung der Ergebnisse wurde die Periode $t_{60-150}$ bzw. $t_{60-210}$ herangezogen, da bekanntermaßen die ersten 60 Min. nach Nahrungsaufnahme durch verschiedene andere Effekte überlagert sind. Die gefundenen Werte wurden durch intraindividuelle Auswertung erhalten, wobei sich für die Mittelwerte die Streuung nach folgender Gleichung errechnet:

$$SEM = \sqrt{\frac{(x_i - \bar{x})^2}{N(N-1)}}$$

$x_i$ = Einzelwerte
$\bar{x}$ = Mittelwerte

N = Anzahl der Meßwerte

Die Kaffeeproben Nr. 1 bis 5 wiesen einen identischen Röstgrad auf und unterschieden sich nur durch steigende Mengen von Chlorogensäure (Tabelle 5), wobei die Proben 3 bis 5 der Erfindung entsprechen. Wie die in Tabelle 6 enthaltenen Ergebnisse zeigen, führt Kaffee 1 zur höchsten Säurestimulation, mit steigendem Chlorogensäuregehalt nimmt die Magensäuresekretion signifikant ab. Auch die Volumensekretion nimmt in der Reihenfolge der Kaffeesorten 1 bis 5 ab. Der Einfluß der Chlorogensäure auf die Reduzierung der durch Kaffee-Röststoffe stimulierten menschlichen Magensäuresekretion ist offensichtlich.

Bei den Kaffeesorten I bis IV handelte es sich um solche mit unterschiedlichem Röstgrad (Farbwert), Extrakt und Chlorogensäuregehalt (Tabelle 5). Der Extrakt der einzelnen Proben wurde bestimmt, indem jeweils 100 ml des Kaffeeaufgusses (hergestellt wie für die Verabreichung an die Probanden) bis zur Trockne eingeengt wurde. Der erhaltene Trockenrückstand ist als Extrakt in g/100 ml Kaffee angegeben. Die in Tabelle 7 enthaltenen Ergebnisse zeigen, daß die Kaffeeprobe IV die niedrigste Säurestimulation ergibt. Im Vergleich zu Kaffeeprobe IV führen die Proben III, II und I zu einer deutlich höheren Magensäuresekretion, wobei die nicht erfindungsgemäße Probe III am ungünstigsten abschneidet. Dasselbe gilt für die Volumensekretion. Die Ergebnisse machen deutlich, daß ein Zusammenhang zwischen dem Röstgrad und Extrakt einerseits und dem Chlorogensäuregehalt andererseits besteht und daß einem hohem Röststoffgehalt im Aufguß ein höherer Chlorogensäuregehalt entsprechen muß, um eine möglichst niedrige Magensäuresekretion und damit verbesserte Verträglichkeit zu erreichen.

Die Kaffeeproben A bis D (Tabelle 5) unterschieden sich entweder im Röstgrad oder bei gleichem Röstgrad im Chlorogensäuregehalt. Der Vergleich zwischen den Proben A und D zeigt, daß ein höherer Röstsubstanzgehalt (niedrigerer Farbwert entsprechend einem höheren Röstgrad und höherer Extrakt) bei gleichem Chlorogensäuregehalt eine vermehrte Säuresekretion zur Folge hat. Andererseits belegen die Proben B und C, daß bei Kaffees mit identischem Röstsubstanzgehalt die Probe mit dem höheren Chlorogensäuregehalt zu einer deutlich niedrigeren Magensäuresekretion führt.

## Tabelle 5

| Kaffee Nr. | Chlorogensäuregehalt mg/100 ml Kaffee | Extraktgehalt (g/100 ml Kaffee) | Röstgrad (Farbwert) |
|---|---|---|---|
| 1 | 110.0 | | |
| 2 | 134.3 | | |
| 3 | 156.8 | | |
| 4 | 178.1 | | |
| 5 | 188.1 | | |
| I | 193 | 1,51 | 84 |
| II | 149 | 1,41 | 110 |
| III | 105 | 1,32 | 85 |
| IV | 194 | 1,63 | 87 |
| A | 124 | 1,36 | 90 |
| B | 98 | 1,37 | 75 |
| C | 124 | 1,38 | 75 |
| D | 124 | 1,49 | 60 |

## Tabelle 6

Kumulierte Magensäuresekretion und gastrale Volumensekretion zwischen der 60.- 150. Minute nach Kaffeegenuß (250 ml der Kaffees 1 - 5) bei 10 gesunden Probanden (intraindividuelle Auswertung)

| Kaffee Nr. | | Magensäuresekretion $t_{60-150}$ | % Zunahme gegenüber Kaffee Nr. 5 | Gastrale Volumensekretion $t_{60-150}$ | % Zunahme gegenüber Kaffee Nr. 5 |
|---|---|---|---|---|---|
| 5 | $\bar{x}$ | 36,6 ± | | 69,8 ± | |
| | SEM | 6,70 | | 8,29 | |
| 4 | $\bar{x}$ | 394 ± | 7,6 % | 77,8 ± | 11 % |
| | SEM | 6,91 | | 8,66 | |
| 3 | $\bar{x}$ | 51,0 ± | 39 % | 87,2 ± | 25 % |
| | SEM | 8,49 | | 11,23 | |
| 2 | $\bar{x}$ | 53,2 ± | 45 % | 90,6 ± | 30 % |
| | SEM | 13,62 | | 19,16 | |
| 1 | $\bar{x}$ | 64,5 ± | 76 % | 101,1 ± | 45 % |
| | SEM | 5,96 | | 8,28 | |

## Tabelle 7

Kumulierte Magensäuresekretion und gastrale Volumensekretion zwischen der 60. - 150. Minute nach Kaffeegenuß (250 ml der Kaffees I bis IV) bei 10 gesunden Probanden (intraindividuelle Auswertung)

| Kaffee Nr. | | Magensäuresekretion $t_{60-150}$ | % Zunahme gegenüber Kaffee Nr. IV | Gastrale Volumensekretion $t_{60-150}$ | % Zunahme gegenüber Kaffee Nr. IV |
|---|---|---|---|---|---|
| IV | $\bar{x}$ | 48,3 ± | | 78,2 ± | |
| | SEM | 7,0 | | 6,6 | |
| III | $\bar{x}$ | 66,7 ± | + 38 % | 85,7 ± | + 10 % |
| | SEM | 9,0 | | 6,7 | |
| II | $\bar{x}$ | 55,3 ± | + 15 % | 81,4 ± | + 4 % |
| | SEM | 8,0 | | 9,0 | |
| I | $\bar{x}$ | 54,0 ± | + 12 % | 84,1 ± | + 8 % |
| | SEM | 7,0 | | 8,5 | |

## Tabelle 8

Kumulierte Magensäuresekretion und gastrale Volumensekretion zwischen der 60. - 210. Minute nach Kaffeegenuß (250 ml der Kaffees A-D) bei 10 gesunden Probanden (intraindividuelle Auswertung)

| Kaffee Nr. | | Magensäuresekretion $t_{60-210}$ | % Zunahme gegenüber Kaffee Nr. A | Gastrale Volumensekretion $t_{60-210}$ | % Zunahme gegenüber Kaffee Nr. A |
|---|---|---|---|---|---|
| A | $\bar{x}$ | 74.3 ± | | 147.4 ± | |
| | SEM | 15.3 | | 14.6 | |
| B | $\bar{x}$ | 85.2 ± | 14,6 % | 179.4 ± | 21.7 % |
| | SEM | 12,0 | | 12,1 | |
| C | $\bar{x}$ | 75,9 ± | 2,2 % | 137.4 ± | - 6.8 % |
| | SEM | 11,0 | | 5.6 | |
| D | $\bar{x}$ | 86.4 ± | 16.3 % | 151.6 ± | 2.8 % |
| | SEM | 13,4 | | 15.2 | |

## Patentansprüche

1. Röstkaffee handelsüblicher normaler Röstung mit einem erhöhten Gehalt an 3-, 4- und 5-Caffeoylchinasäuren (Chlorogensäure) von mehr als 2,8 Gew.-%, welcher prozentual mindestens um denselben Betrag erhöht ist, um den jeweils der Röststoffgehalt im Aufguß (gemessen als Farbwert des gemahlenen Kaffees) zunimmt, ausgehend von einem Chlorogensäuregehalt von etwa 2,8 Gew.-% bei einem Farbwert von etwa 90.

EP 0 256 104 B1

2. Instant-Kaffeepulver mit einem erhöhten Chlorogensäuregehalt von mehr als 8,5 Gew.-%.

3. Kaffee nach Anspruch 1 oder 2, dadurch gekennzeichnet, daß er die Chlorogensäure mindestens teilweise in Form von Salzen enthält.

4. Kaffee mit einem erhöhten Gehalt an Inhaltsstoffen, insbesondere Chlorogensäure, welche dem Rohkaffee entzogen und dem Röstkaffee zugesetzt worden sind.

5. Verfahren zur Herstellung von Kaffee gemäß den Ansprüchen 1 bis 4, dadurch gekennzeichnet, daß man durch Behandeln von Rohkaffee mit einem Lösungsmittel einen Extrakt herstellt, den extrahierten Kaffee und/oder eine nicht extrahierte Kaffeecharge röstet, den gegebenenfalls aufkonzentrierten Extrakt ganz oder teilweise dem Röstkaffee vor oder nach dem Mahlen zusetzt und den Kaffee trocknet.

6. Verfahren nach Anspruch 5, dadurch gekennzeichnet, daß man als Lösungsmittel Wasser verwendet.

7. Verfahren nach Anspruch 5 oder 6, dadurch gekennzeichnet, daß man den Rohkaffee-Extrakt auf einen Feststoffgehalt von mehr als 15 Gew.-% aufkonzentriert.

8. Verfahren nach Anspruch 5, dadurch gekennzeichnet, daß man bei 60 bis 120°C trocknet.

9. Verfahren nach einem der Ansprüche 5 bis 8, dadurch gekennzeichnet, daß man aus dem Rohkaffee-Extrakt die Inhaltsstoffe abtrennt, welche dem Röstkaffee wieder zugesetzt werden sollen, während man 0 bis 100 % des zurückbleibenden Extraktes dem Rohkaffee vor dem Rösten wieder zufügt.

10. Verfahren nach einem der Ansprüche 5 bis 8, dadurch gekennzeichnet, daß man zum Extrahieren des Rohkaffees einen im Kreislauf geführten Extrakt verwendet, der nur hinsichtlich der Inhaltsstoffe, die später dem Röstkaffee zugesetzt werden sollen, nicht gesättigt ist, und anschließend die Inhaltsstoffe auf an sich bekannte Weise abtrennt.

11. Verfahren nach einem der Ansprüche 5 bis 10, dadurch gekennzeichnet, daß man einen Chlorogensäure enthaltenden Extrakt herstellt und zumindest einen Teil der extrahierten Chlorogensäure dem Röstkaffee zusetzt.

12. Verfahren zur Herstellung von Röstkaffee gemäß den Ansprüchen 1 bis 3, dadurch gekennzeichnet, daß man zu Röstkaffee isolierte Chlorogensäure zusetzt.

13. Verfahren zur Herstellung von Röstkaffee gemäß Anspruch 3, dadurch gekennzeichnet, daß man die Chlorogensäure dem Röstkaffee zumindest teilweise in Form von Salzen zusetzt.

14. Verfahren zur Herstellung von Röstkaffee gemäß den Ansprüchen 1 bis 3, dadurch gekennzeichnet, daß man die Chlorogensäure einem Rohkaffee in solcher Menge zusetzt, daß das daraus hergestellte Röstprodukt einen Chlorogensäuregehalt von mehr als 2,8 Gew.-% aufweist.

15. Verfahren zur Herstellung von Röstkaffee mit deutlich erhöhtem Chlorogensäuregehalt, dadurch gekennzeichnet, daß man durch Behandeln von Rohkaffee mit einem Lösungsmittel einen Extrakt herstellt, den extrahierten Kaffee auf einen mittleren Wassergehalt zurücktrocknet, ihn mit dem aufkonzentrierten Extrakt wieder imprägniert, auf Röstfeuchte zurücktrocknet und dann röstet.

16. Verfahren zur Herstellung von Röstkaffee gemäß Anspruch 1, dadurch gekennzeichnet, daß man Rohkaffee einer Provenienz und/oder einer Art und/oder Rohkaffees mit unterschiedlichem Chlorogensäuregehalt verschieden stark röstet und daraus eine Mischung herstellt, die gegenüber einer Einheitsröstung einen deutlich erhöhten Chlorogensäuregehalt aufweist, der dann bedarfsweise durch Zusatz isolierter Chlorogensäure auf über 2,8 Gew.-% angehoben wird.

17. Verfahren zur Herstellung von Röstkaffee gemäß den Ansprüchen 14 bis 16, dadurch gekennzeichnet, daß man zumindest einen Teil des dort eingesetzten Rohkaffees den Verfahren gemäß den Ansprüchen 5 bis 11 und 13 bis 14 unterzieht.

18. Verfahren gemäß den Ansprüchen 5 bis 17, dadurch gekennzeichnet, daß man von entcoffeinierten oder teilentcoffeinierten Rohkaffees ausgeht oder bei der Extraktion auch das Coffein teilweise oder vollständig dem Rohkaffee entzieht.

**Claims**

1. Roasted coffee, roasted in the normal commercial manner, with an increased content of 3-, 4-, and 5-caffeic-quinic acids (chlorogenic acid) of more than 2.8 % by weight, which is increased in percentage terms at least by the same amount as that by which the roasted material in the infusion increases (measured as the colour value of the ground coffee), starting with a chlorogenic acid content of about 2.8 % by weight at a colour value of about 90.

2. Instant coffee powder with an increased chlorogenic acid content of more than 8.5 %.

3. Coffee according to claim 1 or 2, characterized in that it contains the chlorogenic acid at least partly in the form of salts.

4. Coffee with an increased content of constituents, particularly chlorogenic acid, which are removed from the raw coffee and added to the roasted coffee.

5. Process for the production of coffee according to claims 1 to 4, characterized in that an extract is produced by treating the raw coffee with a solvent, the extracted coffee and/or a non-extracted coffee charge is roasted, the optionally concentrated extract is wholly or partly added to the roasted coffee before or after grinding and the coffee is dried.

6. Process according to claim 5, characterized in that water is used as the solvent.

9

7. Process according to claim 5 or 6, characterized in that the raw coffee extract is concentrated to a solids content of more than 15 % by weight.

8. Process according to claim 5, characterized in that drying takes place at 60 to 120°C.

9. Process according to any of claims 5 to 8, characterized in that the constituents which are to be re-added to the roasted coffee are separated from the raw coffee extract, while 0 to 100 % of the remaining extract is re-added to the raw coffee prior to roasting.

10. Process according to any of claims 5 to 8, characterized in that to extract the raw coffee a recycled extract is used which is unsaturated only with regard to the constituents which are later to be added to the roasted coffee, and that subsequently the constituents are separated in a manner known per se.

11. Process according to any of claims 5 to 10, characterized in that an extract containing chlorogenic acid is produced, and at least part of the extracted chlorogenic acid is added to the roasted coffee.

12. Process for the production of roasted coffee according to claims 1 to 3, characterized in that isolated chlorogenic acid is added to the roasted coffee.

13. Process for the production of roasted coffee according to claim 3, characterized in that the chlorogenic acid is added to the roasted coffee at least partly in the form of salts.

14. Process for the production of roasted coffee according to claim 1 to 3, characterized in that the chlorogenic acid is added to the roasted product in such a quantity that the roasted product prepared from it has a chlorogenic acid content of more than 2.8 %.

15. Process for the production of roasted coffee with a clearly increased chlorogenic acid content, characterized in that an extract is produced by treating raw coffee with a solvent, the extracted coffee is re-dried to an average water content, it is re-impregnated with the concentrated extract, re-dried to roasting moisture and then roasted.

16. Process for the production of roasted coffee according to claim 1, characterized in that raw coffee with a single origin and/or a single type and/or raw coffee with different chlorogenic acid contents are roasted to a varying degree and a mixture is produced from the same which has a clearly increased chlorogenic acid content compered with a unitary roast and if necessary can be raised to over 2.8 % by weight by the addition of isolated chlorogenic acid.

17. Process for the production of roasted coffee according to claims 14 to 16, characterized in that at least part of the raw coffee used is subjected to the process according to claim 5 to 11 and 13 to 14.

18. Process according to claims 5 to 17, characterized in that decaffeinated or partly decaffeinated raw coffee is used as the starting product, or the caffeine is partly or completely removed from the raw coffee during the extraction.

## Revendications

1. Café torréfié à torréfaction normale du commerce, ayant une teneur élevée en acides 3-, 4- et 5-caféyl-quinique (acide chlorogénique) de plus de 2,8 % en poids, qui est élevée, en pourcentage, d'au moins la même valeur à laquelle est augmentée en chaque cas la teneur de l'infusion en substances provenant de la torréfaction (mesurée par la valeur trichromatique du café moulu), à partir d'une teneur en acide chlorogénique d'environ 2,8 % en poids, à une valeur trichromatique d'environ 90.

2. Poudre de café instantané ayant une teneur élevée en acide chlorogénique de plus 8,5 % en poids.

3. Café selon la revendication 1 ou 2, caractérisé en ce qu'il contient l'acide chlorogénique au moins partiellement sous forme de sels.

4. Café ayant une teneur élevée en composants, notamment en acide chlorogénique, qui sont extraits du café brut et ajoutés au café torréfié.

5. Procédé pour la fabrication de café selon les revendication 1 à 4, caractérisé en ce que l'on prépare un extrait par traitement de café brut avec un solvant, on torréfie le café extrait et/ou une charge de café non extrait, on ajoute en partie ou en totalité l'extrait, éventuellement concentré, au café torréfié, avant ou après la mouture, puis on sèche le café.

6. Procédé selon la revendication 5, caractérisé en ce que l'on utilise de l'eau en tant que solvant.

7. Procédé selon la revendication 5 ou 6, caractérisé en ce que l'on concentre l'extrait de café brut jusqu'à une teneur en matière sèche de plus de 15 % en poids.

8. Procédé selon la revendication 5, caractérisé en ce que l'on effectue le séchage à 60 - 120°C.

9. Procédé selon l'une des revendications 5 à 8, caractérisé en ce que l'on sépare hors de l'extrait de café brut les composants qui doivent être ajoutés de nouveau au café torréfié, tandis que l'on ajoute au café brut de 0 à 100 % de l'extrait résiduel, avant la torréfaction.

10. Procédé selon l'une des revendications 5 à 8, caractérisé en ce que, pour l'extraction du café brut, on utilise un extrait mis en circuit, qui n'est pas saturé seulement en ce qui concerne les composants qui doivent être ultérieurement ajoutés au café torréfié, et on sépare ensuite les composants d'une façon connue en soi.

11. Procédé selon l'une des revendications 5 à 10, caractérisé en ce que l'on prépare un extrait contenant de l'acide chlorogénique et on ajoute au café torréfié au moins une partie de l'acide chlorogénique extrait.

12. Procédé pour la fabrication de café torréfié selon les revendications 1 à 3, caractérisé en ce que l'on ajoute au café torréfié de l'acide chlorogénique isolé.

13. Procédé pour la fabrication de café torréfié selon la revendication 3, caractérisé en ce que l'on ajoute au café torréfié l'acide chlorogénique au moins en partie sous forme de sels.

14. Procédé pour la fabrication de café torréfié selon les revendications 1 à 3, caractérisé en ce que l'on ajoute à un café brut l'acide chlorogénique en une quantité telle que le produit torréfié obtenu à partir de ce café brut présente une teneur en acide chlorogénique de plus de 2,8 % en poids.

15. Procédé pour la fabrication de café torréfié ayant une teneur nettement accrue en acide chlorogénique, caractérisé en ce que l'on prépare un extrait par traitement de café brut par un solvant, on sèche de nouveau l'extrait jusqu'à une teneur en eau moyenne, on l'imprègne de nouveau avec l'extrait concentré, on le sèche jusqu'à une teneur en eau convenant à la torréfaction.

16. Procédé pour la fabrication de café torréfié selon la revendication 1, caractérisé en ce que l'on torréfie à un degré variable du café brut d'une provenance et ou d'un type et/ou des cafés bruts à teneur variée en acide chlorogénique, et on prépare à partir de celui-ci un mélange qui présente, par rapport à un produit uniformément torréfié, une teneur nettement accrue en acide chlorogénique, que l'on augmente ensuite au besoin jusqu'à plus de 2,8 % en poids, par addition d'acide chlorogénique isolé.

17. Procédé pour la fabrication de café torréfié selon les revendications 14 à 16, caractérisé en ce que l'on soumet au moins une partie du café brut, utilisé à cette fin, au procédé selon les revendications 5 à 11 et 13 à 14.

18. Procédé selon les revendications 5 à 17, caractérisé en ce que l'on part de cafés bruts décaféinés ou partiellement décaféinés, ou, lors de l'extraction, on extrait en outre hors du café brut la caféine, en partie ou en totalité.